# EUROPÄISCHE PATENTSCHRIFT

(11) **EP 2 015 926 B1**
(45) Veröffentlichungstag und Bekanntmachung des Hinweises auf die Patenterteilung: **04.09.2019**
(21) Anmeldenummer: 07728864.5
(22) Anmeldetag: 07.05.2007
(51) Int. Cl.: B30B 11/08, B30B 15/30

(54) **TABLETTIERMASCHINE**
TABLETTING MACHINE
MACHINE À FABRIQUER DES COMPRIMÉS

(30) Priorität: 11.05.2006 DE 102006023333
(43) Veröffentlichungstag der Anmeldung: 21.01.2009
(73) Patentinhaber: Korsch AG, 13509 Berlin (DE)
(72) Erfinder: MATTHES, Michael, 10585 Berlin (DE); REICHE, Jörg, 14532 Kleinmachnow (DE); HAASE, Helmut, 16833 Fehrbelling / OT Linum (DE)
(74) Vertreter: Gulde & Partner
(86) Internationale Anmeldenummer: PCT/EP2007/054411
(87) Internationale Veröffentlichungsnummer: WO 2007/131906

(56) Entgegenhaltungen:
- US-A- 2 970 554
- US-A- 3 577 842

## Beschreibung

Die Erfindung betrifft eine Tablettiermaschine mit einem Matrizentisch, der wenigstens eine Matrize umfasst, und einer Einfülleinrichtung zum Einfüllen einer zu pressenden Masse in die Matrizen.

Tablettiermaschinen der gattungsgemäßen Art sind bekannt. Hierbei wird beispielsweise bei Rundläufer-Tablettiermaschinen ein den Matrizentisch tragender Rotor durch eine Antriebsmaschine in Rotation versetzt. Über wenigstens einen so genannten Füllschuh werden die Matrizen mit der zu pressenden Masse gefüllt und je nach Winkelstellung des Rotors werden über Führungskurven geführte Unterstempel und Oberstempel axial zu den Matrizen verlagert. Die Unter- und Oberstempel werden an wenigstens einer Pressstation, in der Regel an einer Vorpressstation und einer Hauptpressstation, vorbeigeführt. Dort werden die Ober- und Unterstempel an stationär angeordneten Druckrollen im Wesentlichen tangential vorbeigeführt, so dass auf die in den Matrizen eingebrachte Pressmasse eine Presskraft aufbringbar ist.

Derartige Rundläufer-Tablettiermaschinen werden unter anderem bei der Herstellung von pharmazeutischen, chemischen und technischen Presslingen eingesetzt. Insbesondere in diesen Bereichen, jedoch auch bei anderen Anwendungsgebieten, kommt es auf eine verlustfreie und damit verschmutzungsfreie Fertigung an. Ferner ist eine möglichst einfache Reinigung der Rundläufer-Tablettiermaschinen unablässig.

Insbesondere beim Einbringen der zu pressenden Masse über den Füllschuh in die Matrizen ist eine möglichst dichte Anordnung erforderlich, um einerseits den Austrag von Material zu behindern und andererseits das Eindringen von Fremdstoffen in das zu pressende Material zu verhindern. Bekannt ist, zwischen Füllschuh und Matrizentisch Dichtstreifen vorzusehen, die üblicherweise an der Unterseite des Füllschuhs beabstandet zu der wenigstens einen Füllöffnung angeordnet sind.

Diese Dichtstreifen schleifen quasi auf der Oberfläche des Matrizentisches während dessen Rotation. Zwischen Füllöffnung und Dichtstreifen können Spalten, Hohlräume, Toträume, Taschen oder dergleichen existieren, die sich während des bestimmungsgemäßen Gebrauchs mit dem zu pressenden Material füllen und zu zusätzlichen Abdichtproblemen führen.

Aus US 3,577,842 ist eine Presse zum Pressen von pulverförmigen Material gemäß dem Oberbegriff des Anspruchs 1 bekannt, bei der zwischen einem Füllschuh und einem Matrizentisch eine Dichteinrichtung angeordnet ist. Die Dichteinrichtung ist durch die Kraft eines Federelementes in Richtung des Matrizentisches beaufschlagt. Die Dichteinrichtung ist hierbei beabstandet zu einer Kontur einer Füllöffnung des Füllschuhs angeordnet, so dass es zur Ausbildung von Hohlräumen zwischen dem Füllschuh und dem Matrizentisch kommt, in denen sich zu verpressenden Material ansammelt.

Der Erfindung liegt die Aufgabe zugrunde, eine Tablettiermaschine der gattungsgemäßen Art zu schaffen, die sich durch einen einfachen Aufbau auszeichnet und eine effektive Dichtung zwischen Einfülleinrichtung für zu pressende Masse und Matrizentisch bietet.

Diese Aufgabe wird erfindungsgemäß durch eine Tablettiermaschine mit den im Anspruch 1 genannten Merkmalen gelöst. Dadurch, dass eine Dichteinrichtung zwischen Füllschuh und Matrizentisch wenigstens ein die Füllöffnung direkt ausbildendes Element umfasst, welches mit einer in Richtung des Matrizentisches wirkenden Kraft beaufschlagt ist, das mittels eines Federgelenkes an einem Grundkörper des Füllschuhs befestigt ist und das ein Profilring ist, ist in sehr effektiver Weise eine Abdichtung des Spaltes zwischen Füllschuh und Matrizentisch möglich. Das vorzugsweise durch eine Federkraft vorgespannte Element liegt mit geringem Anpressdruck quasi auf dem Matrizentisch auf, so dass hier ein Austrag von zu verpressendem Material und ein Eintrag von Fremdstoffen nicht möglich ist. Ferner wird durch die direkte Ausbildung der Füllöffnung durch die Dichteinrichtung erreicht, dass irgendwelche Hohlräume, Toträume, Taschen oder dergleichen - in denen sich zu verpressendes Material ansammeln könnte - nicht vorhanden sind.

Erfindungsgemäß ist ferner vorgesehen, dass zur Aufnahme des als Federelement und Montageelement dienenden Profil-Ringes das die Kontur der Füllöffnung ausbildende Element und der Füllschuh zur Form des Profil-Ringes komplementäre Aufnahmen bilden. Diese Aufnahmen sind vorzugsweise als randoffene, umlaufende Nuten ausgebildet. Hierdurch wird in einfacher Weise eine werkzeuglose, selbstjustierende Montage des die Kontur der Füllöffnung ausbildenden Elementes möglich. Ferner ist durch die Lage und Ausbildung der Aufnahmen sowie des Profil-Ringes das Rückstellverhalten des Elementes einstellbar. Definierte Federkräfte und somit Anlagedrücke des Elementes an dem Matrizentisch sind somit erzielbar. Hierdurch ergibt sich außerdem eine automatische Nachstellung des Elementes, um beispielsweise eine verschleißbedingte Veränderung der Oberfläche des Matrizentisches oder des Dichtelementes auszugleichen.

Es wird erreicht, dass in einfacher Weise eine definierte Position des Elementes erzielt werden kann, so dass neben der korrekten Ausbildung der Füllöffnung eine definierte Positionierung des Elementes möglich ist. Hierdurch wird sichergestellt, dass die gewünschten Dichteigenschaften durch das Element optimal eingehalten werden. Das Federelement dient gleichzeitig als Befestigungselement des die Kontur der Füllöffnung ausbildenden Elementes, so dass auf weitere zusätzliche Befestigungsmittel, beispielsweise Schrauben und dergleichen, verzichtet werden kann.

In weiterer bevorzugter Ausgestaltung der Erfindung ist vorgesehen, dass die den Profil-Ring aufnehmenden Konturen des Füllschuhs beziehungsweise des Elementes so ausgebildet sind, dass eine Montage nur von einer Seite, hier vorzugsweise von der dem Matrizentisch zugewandten Seite, des Füllschuhs möglich ist. Somit werden Fehlmontagen vermieden. Andererseits kann so ein Herausdrücken oder dergleichen des Elementes während des bestimmungsgemäßen Einsatzes beim Betrieb der Tablettiermaschine verhindert werden.

Darüber hinaus ist in bevorzugter Ausgestaltung der Erfindung vorgesehen, dass sowohl das die Kontur der Füllöffnung ausbildende Element als auch das Federelement aus den mit der Tablettiermaschine durchzuführenden Fertigungsprozessen angepassten Materialien, insbesondere temperaturbeständigen Materialien, neutralen Materialien, gegen das zu verpressende Pulver und dergleichen bestehen.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine teilweise schematische Darstellung einer Rundläufer-Tablettiermaschine;
- Figur 2: eine schematische Draufsicht auf einen Füllschuh;
- Figur 3: eine Schnittdarstellung durch den Füllschuh;
- Figur 4: eine Schnittdarstellung durch eine Explosionsdarstellung des Füllschuhs;
- Figur 5: eine teilweise Explosionsdarstellung des Füllschuhs;
- Figur 6: eine Schnittdarstellung durch den Randbereich eines Einsetzelementes des Füllschuhs;
- Figur 7: eine Schnittdarstellung durch einen Profil-Ring und
- Figur 8: eine Schnittdarstellung durch einen Füllschuh mit montierten Dichtelementen.

Rundläufer-Tablettiermaschinen der hier angesprochenen Art sind allgemein bekannt, so dass im Rahmen der vorliegenden Beschreibung auf den grundlegenden Aufbau und die grundlegenden Funktionen nicht näher eingegangen wird.

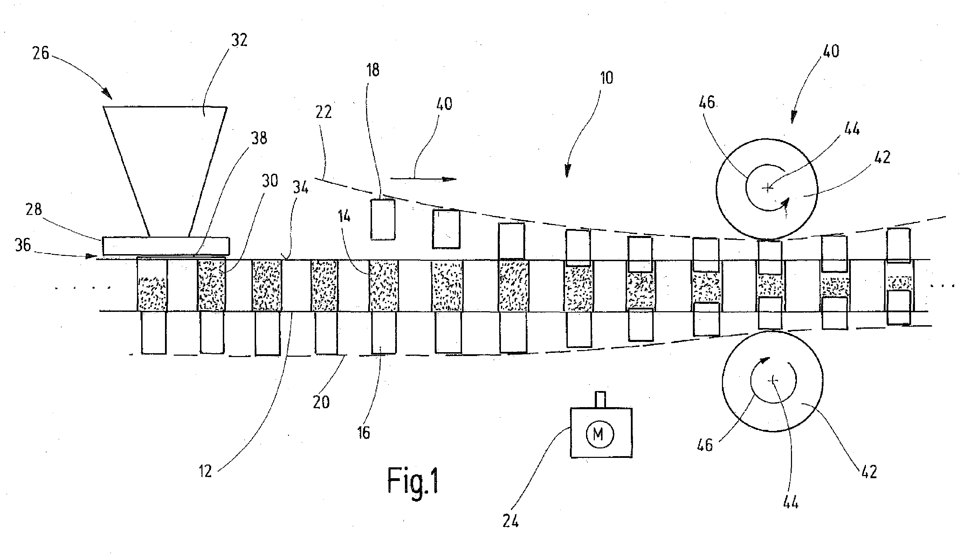

Figur 1 zeigt in einer schematisierten Teilansicht die Abbildung eines Matrizentisches 12 einer insgesamt mit 10 bezeichneten Rundläufer-Tablettiermaschine. Der Matrizentisch 12 besitzt über seinen Umfang eine Vielzahl beabstandeter Matrizen 14. Jeder Matrize 14 ist ein Unterstempel 16 und ein Oberstempel 18 zugeordnet, die über hier angedeutete Führungskurven 20 beziehungsweise 22 geführt sind. Matrizentisch 12 und Unterstempel 16 sowie Oberstempel 18 rotieren hierbei synchron um die Drehachse des Matrizentisches 12. Der Matrizentisch 12 ist durch eine hier nur angedeutete elektrische Antriebsmaschine 24 rotierbar.

In die Matrizen 14 wird über eine Einfülleinrichtung 26, die einen so genannten Füllschuh 28 umfasst, eine hier lediglich angedeutete Pressmasse 30 eingefüllt. Im Normalbetrieb der Rundläufer-Tablettiermaschine 10 wird die Pressmasse 30 über die gesamte Höhe der Matrizen 14 eingefüllt. Die Füllhöhe kann beispielsweise durch Höhenlage der Unterstempel 16 an einer nicht dargestellten Abstreifstation definiert werden.

Der Füllschuh 28 steht mit einem Vorratsbehälter 32 in Verbindung, von dem die Pressmasse 30 dem Füllschuh 28 zugeführt wird. Der Füllschuh 28 besitzt eine - in Figur 1 nicht erkennbare - Füllöffnung, über die die Masse 30 in die Matrizen 14 gelangt. Innerhalb des Füllschuhs 28 sind üblicherweise noch rotierende Dosierräder, Schikanen, Staustufen oder dergleichen angeordnet, die eine gleichmäßige Zuführung von Pressmasse 30 gewährleisten.

Der Füllschuh 28 ist parallel zu einer Oberfläche 34 des Matrizentisches 12 angeordnet. Zwischen Füllschuh 28 und Matrizentisch 12 ist ein Spalt 36 ausgebildet, so dass bei Rotation des Matrizentisches 12 der Füllschuh 28 nicht in direkten Anlagekontakt mit dem Matrizentisch 12 kommt. Im Bereich der Füllöffnung ist ein in Figur 1 nur angedeutetes, anhand der nachfolgenden Figuren noch näher erläutertes Element 38 vorgesehen. Das Element 38 bildet die Kontur der Füllöffnung aus und ist mit einer in Richtung des Matrizentisches 12 wirkenden Federkraft beaufschlagt, so dass das Element 38 an der Oberfläche 34 des Matrizentisches 12 anliegt. Die Federkraft, mit der das Element 38 beaufschlagt und in Richtung des Matrizentisches 12 gedrängt ist, ist so bemessen, dass hier nur eine leichte Anlage gegeben ist. Die Anlage des Elementes 38 am Matrizentisch 12 dient der Abdichtung des Spaltes 36 im Bereich der Füllöffnung.

Entsprechend dem Verlauf der Führungskurven 20 und 22 tauchen die Unterstempel 16 und die Oberstempel 18 in die Matrizen 14 ein und verpressen die Pressmasse 30 zu der gewünschten Tablette oder dergleichen. Hierzu werden die Unterstempel 16 und die Oberstempel 18 an wenigstens einer Pressstation 40 vorbeigeführt, die ortsfest angeordnete Druckrollen 42 umfasst. Die Druckrollen 42 sind jeweils um eine Drehachse 44 drehbar gelagert. Der Abstand der Druckrollen 42 zueinander ist definiert und bestimmt letztendlich die Höhe der zu pressenden Tablette. Ein Antrieb der Druckrollen 42 in Pfeilrichtung 46 - die obere Druckrolle 42 entgegen dem Uhrzeigersinn, die untere Druckrolle 42 in Uhrzeigersinn - erfolgt durch Vorbeiführen der Unterstempel 16 beziehungsweise Oberstempel 18 entsprechend der Bewegungsrichtung 48 des Matrizentisches 12.

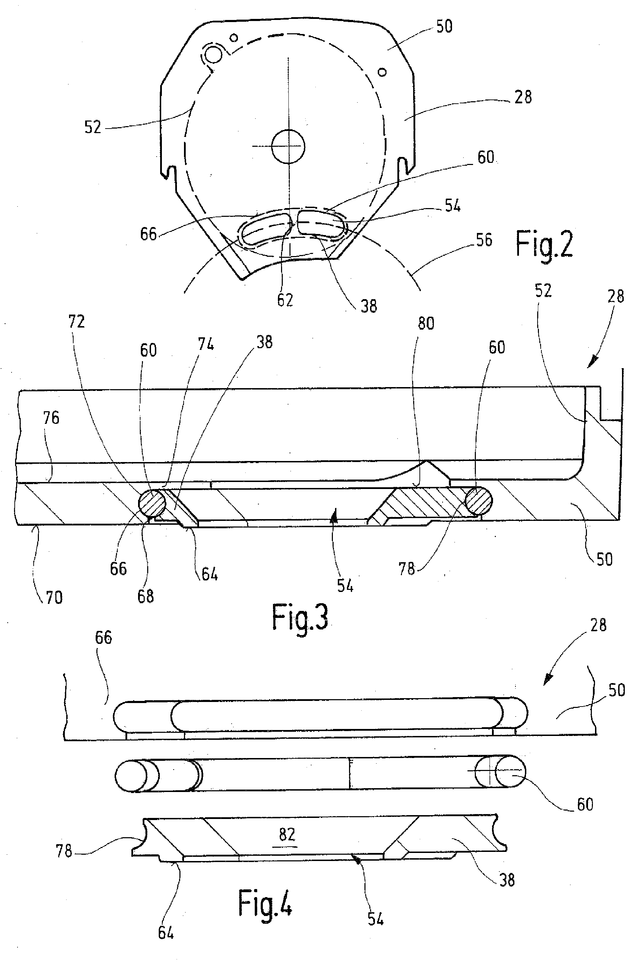

Figur 2 zeigt eine schematische Unteransicht des Füllschuhs 28. Das heißt, in Figur 2 ist eine Draufsicht auf den Füllschuh 28 aus Richtung des Matrizentisches 12 gezeigt. Der Füllschuh 28 umfasst einen Grundkörper 50, in den eine Vertiefung 52 eingebracht ist. Die Vertiefung 52 ist an der dem Matrizentisch 12 abgewandten Seite offen und dort durch eine im Einzelnen nicht dargestellte Platte verschließbar. Die Vertiefung 52 ist im Wesentlichen kreisrund ausgebildet. Innerhalb dieser Vertiefung 52 rotiert das nicht dargestellte Dosierrad. Am Grund der Vertiefung 52 ist die Füllöffnung 54 ausgebildet. Die Füllöffnung 54 ist kreisbogenförmig ausgebildet, wobei eine gedachte Bogenlinie der Füllöffnung 54 mit einer in Figur 2 angedeuteten Umlaufbahn 56 der Matrizen 14 zusammenfällt. Eine Kontur 58 der Füllöffnung 54 wird durch das Element 38 bestimmt, das über ein als Profil-Ring 60 ausgebildetes Federelement innerhalb des Grundkörpers 50 des Füllschuhs 28 angeordnet ist. Das Element 38 besitzt einen oder mehrere Mittelstege 62, der beziehungsweise die die beiden Längsseiten des Elementes 38 miteinander verbindet. Der Mittelsteg 62 ist hierbei gegenüber der in Richtung des Matrizentisches 12 weisenden Anlagefläche 64 (Figur 3) zurückgesetzt, so dass dieser nicht in Anlagekontakt mit dem Matrizentisch 12 kommt. Der Mittelsteg 62 dient der Fixierung des Elementes 38 in einer Aufnahmenut 66 des Füllschuhs 28. Nach einer weiteren, nicht dargestellten Ausführungsvariante können die Mittelstege auch in Anlagekontakt mit dem Matrizentisch 12 kommen.

Figur 3 zeigt eine Schnittdarstellung durch die Füllöffnung 54. Gleiche Teile wie in den vorhergehenden Figuren sind mit gleichen Bezugszeichen versehen und nicht nochmals erläutert.

Anhand der Darstellung in Figur 3 wird deutlich, dass der Grundkörper 50 eine Aufnahmenut 66 für den Profil-Ring 60 ausbildet. Die Aufnahmenut 66 geht hierbei von einem ersten Abschnitt 68 - der im Wesentlichen senkrecht zur Unterseite 70 des Grundkörpers 50 verläuft - in einen kreisförmigen Abschnitt 72 und von diesem in einen dritten Abschnitt 74 über, der parallel zum Abschnitt 68 verläuft. Die Abschnitte 68 und 74 der Aufnahmenut 66 liegen nicht in einer Ebene. Der Abschnitt 74 ist hierbei weiter in Richtung der Füllöffnung 54 verlagert, so dass es quasi zur Ausbildung einer Stufe zwischen der Unterseite 70 und dem Grund 76 der Vertiefung 52 kommt.

Das Element 38 bildet ebenfalls eine Führungsnut 78 für den Profil-Ring 60 aus. Diese Führungsnut 78 ist an dem umlaufenden Rand des Elementes 38 ausgebildet. Das Element 38 selber besitzt eine Erstreckung, die - bei eingesetztem Element 38 in den Füllschuh 28 - kleiner ist als der Abstand der gegenüberliegenden Abschnitte 68 der Aufnahmenut 66 und größer ist als der gegenüberliegende Abstand der Abschnitte 74 der Aufnahmenut 66. Hierdurch wird erreicht, dass das Element 38 nur von einer Seite, nämlich von der Unterseite 70 her, in den Grundkörper 50 des Füllschuhs 28 eingesetzt werden kann.

An seiner Oberseite 80 schließt das Element 38 bündig mit dem Abschnitt 74 der Aufnahmenut 66 ab. Hierdurch wird erreicht, dass bei Montage des Füllschuhs 28 an der Rundläufer-Tablettiermaschine 10 das Element 38 mit geringem Auflagedruck über die Auflageflächen 64 auf der Oberfläche 34 des Matrizentisches 12 angeordnet werden kann. Das Element 38 wird hierbei in Richtung des Füllschuhs 28 gedrängt. Über den Profil-Ring 60, der als Federelement wirkt, wird eine entsprechend entgegengerichtete Kraft auf das Element 38 ausgeübt, so dass dieses in Richtung des Matrizentisches 12 vorgespannt ist.

Figur 4 zeigt in einer Explosionsansicht nochmals in Schnittdarstellung das Element 38, den Profil-Ring 60 sowie den Grundkörper 50 des Füllschuhs 28. Bei der Darstellung des Elementes 38 wird deutlich, dass hier eine Innenfläche 82 des Elementes 38 trichterförmig angeordnet ist. Hierdurch wird das Einfüllen des zu pressenden Gutes in die Matrizen 14 unterstützt.

Insgesamt wird deutlich, dass die Kontur der Füllöffnung 54 durch das Element 38 bestimmt wird. Die Anlageflächen 64 schließen sich unmittelbar an die Füllöffnung 54 an, so dass die Abdichtung des Spaltes 36 (Figur 1) auch unmittelbar an der Füllöffnung 54 erfolgt.

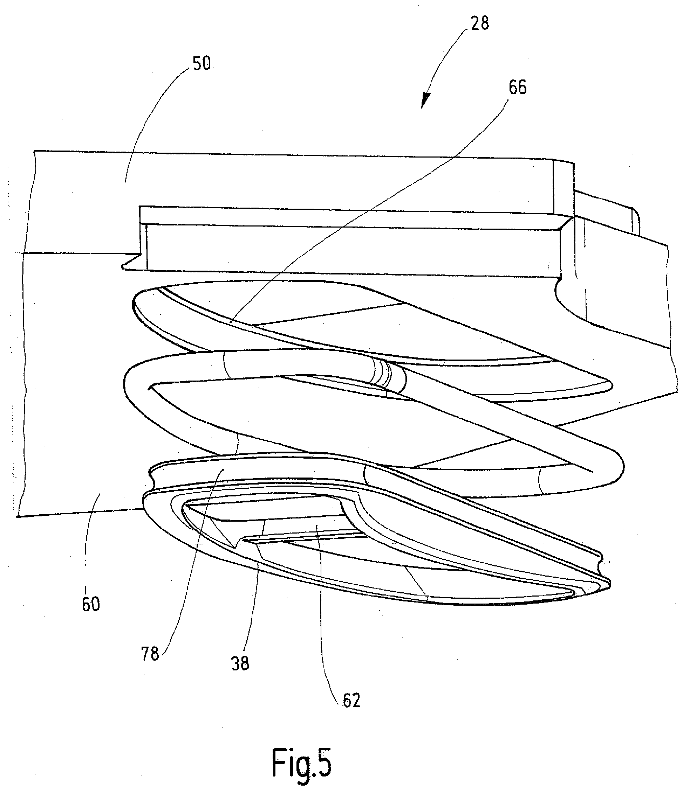

In der in Figur 5 gezeigten Perspektivansicht in Explosionsdarstellung werden nochmals das Element 38, der Profil-Ring 60 sowie der Grundkörper 50 des Füllschuhs 28 deutlich. Die Montage des Elementes 38 erfolgt durch mechanisches Einrasten in den Grundkörper 50, wobei hier über den Profil-Ring 60 ein Formschluss erfolgt. Durch die Elastizität des Profil-Ringes 60 wird eine Haltekraft auf das Element 38 ausgeübt. Gleichzeitig übernimmt der Profil-Ring 60 die Wirkung eines Federelementes bei montiertem Füllschuh 28.

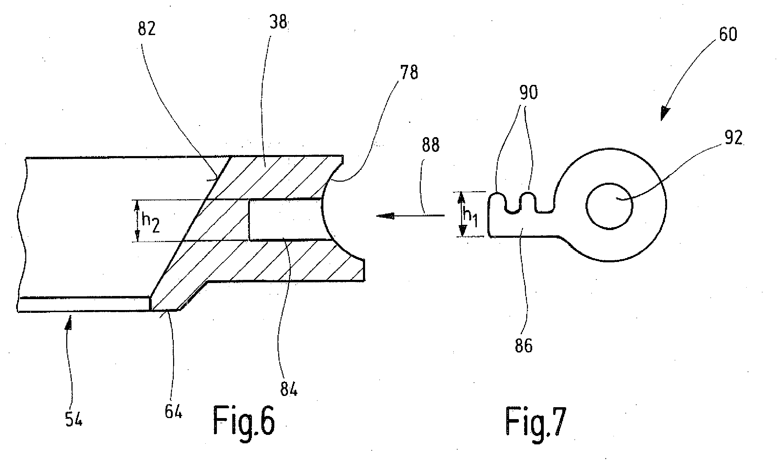

In den Figuren 6 und 7 ist eine mögliche korrespondierende Ausgestaltung des Profil-Ringes 60 (Figur 7) einerseits und der Führungsnut 78 des Elementes 38 (Figur 6) andererseits dargestellt.

Figur 6 zeigt hierzu eine Schnittdarstellung durch einen Randbereich des Elementes 38 und Figur 7 eine Schnittdarstellung durch einen Profil-Ring 60. Anhand der Abbildungen wird deutlich, dass die Führungsnut 78 eine sich in den Grundkörper 38 erstreckende Ringnut 84 umfasst. Der Profil-Ring 60 seinerseits bildet einen Ringwulst 86 aus, der - wie der angedeutete Pfeil 88 verdeutlicht - in die Ringnut 84 einbringbar ist. Der Ringwulst 86 umfasst in eine Richtung entspringende nasenförmige Vorsprünge 90, die beabstandet zueinander angeordnet sind. Eine Höhe h₁ der nasenförmigen Vorsprünge 90 ist geringfügig größer als eine Höhe h₂ der Ringnut 84. Hierdurch erfahren die nasenförmigen Vorsprünge 90 bei Einbringen des Profil-Ringes 60 in die Führungsnut 78 eine Kompression, die letztendlich zu der Lagerung des Elementes 38 in den Grundkörper 50 des Füllschuhs 28 unter Vorspannung führt. Der Profil-Ring 60 besitzt ferner einen Ringkanal 92, der zu einer besseren, durch Dimensionierung des Ringkanals 62 einstellbaren Kompressibilität und somit Beeinflussung der Federspannung führt. Hierdurch wird neben der Dichtwirkung auch die automatische Nachstellbarkeit zum Ausgleich von Verschleiß möglich.

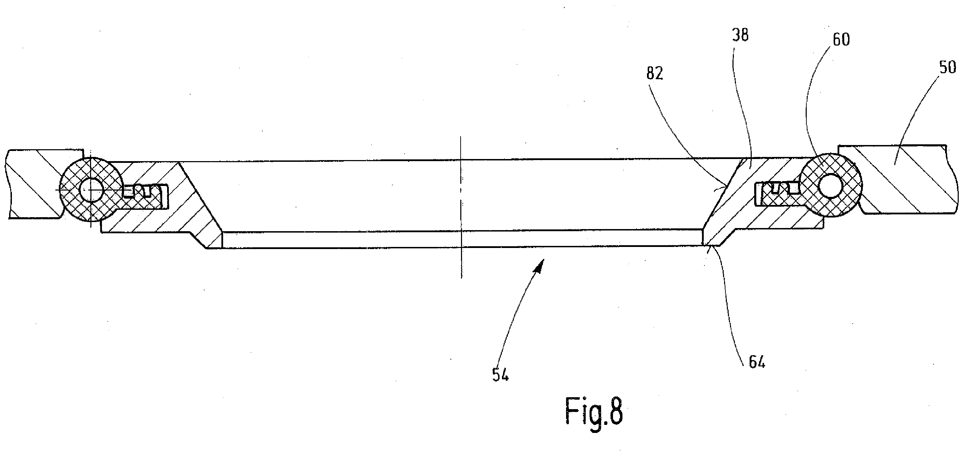

In Figur 8 ist in einer Schnittdarstellung ein über den Profil-Ring 60 am Grundkörper 50 eines Füllschuhs angeordnetes Element 38 verdeutlicht. Insbesondere die selbstjustierende, federelastische Lagerung des Elementes 38 über den Profil-Ring 60 am Grundkörper 50 wird deutlich. Der komplett um das Element 38 umlaufende Profil-Ring 60 hält das Element 80 in einer definierten, federelastischen Position im Grundkörper 50.

Nach weiteren, nicht dargestellten Ausführungsbeispielen kann der Profil-Ring 60 im Querschnitt auch von einer kreisrunden Form abweichen. So sind insbesondere ovale, trapezförmige oder andere geeignete Querschnitte denkbar. Dann ist eine entsprechend angepasste Kontur der Aufnahmenut 66 sowie der Führungsnut 78 erforderlich.

### BEZUGSZEICHENLISTE

- 10: Rundläufer-Tablettiermaschine
- 12: Matrizentisch
- 14: Matrize
- 16: Unterstempel
- 18: Oberstempel
- 20: Führungskurve
- 22: Führungskurve
- 24: Antriebsmaschine
- 26: Einfülleinrichtung
- 28: Füllschuh
- 30: Pressmasse
- 32: Vorratsbehälter
- 34: Oberfläche
- 36: Spalt
- 38: Element
- 40: Pressstation
- 42: Druckrollen
- 44: Drehachse
- 46: Pfeilrichtung
- 48: Bewegungsrichtung
- 50: Grundkörper
- 52: Vertiefung
- 54: Füllöffnung
- 56: Umlaufbahn
- 58: Kontur
- 60: Profil-Ring
- 62: Mittelsteg
- 64: Anlagefläche
- 66: Aufnahmenut
- 68: Abschnitt
- 70: Unterseite
- 72: Abschnitt
- 74: Abschnitt
- 76: Grund
- 78: Führungsnut
- 80: Oberseite
- 82: Innenfläche
- 84: Ringnut
- 86: Ringwulst
- 88: Pfeil
- 90: nasenförmige Vorsprünge
- 92: Ringkanal

## Patentansprüche

1. Tablettiermaschine (10) mit einem Matrizentisch (12), der wenigstens eine Matrize (14) umfasst, den Matrizen (14) zugeordneten Stempeln (16, 18)sowie einer Einfülleinrichtung (26) zum Einfüllen einer zu pressenden Masse (30) in die Matrizen (14), die einen Füllschuh (28)umfasst, der im Wesentlichen parallel zu einer Oberfläche (34) des Matrizentisches (12) angeordnet ist, wobei der Füllschuh (28) wenigstens eine Füllöffnung (54) besitzt, die im Bereich der Matrizen (14) angeordnet ist beziehungsweise anordbar ist, sowie einer Dichteinrichtung zwischen Füllschuh (28) und Matrizentisch (12), dass die Dichteinrichtung wenigstens ein Element (38) umfasst, welches mit einer in Richtung des Matrizentisches (12) wirkenden Kraft beaufschlagt ist,
wobei die Dichteinrichtung die Füllöffnung (54) direkt ausbildet, das wenigstens eine Element (38) mittels eines Federelementes an einem Grundkörper (50) des Füllschuhs (28) befestigt ist und das Federelement ein Profil-Ring (60) ist, **dadurch gekennzeichnet dass** der Grundkörper (50) und das wenigstens eine Element (38) zur Aufnahme des Profil-Ringes (60) komplementäre Aufnahmen ausbilden.

2. Tablettiermaschine nach Anspruch 1, **dadurch gekennzeichnet, dass** die Aufnahmen von randoffenen, umlaufenden Aufnahmenuten (66, 78) gebildet sind.

3. Tablettiermaschine nach Anspruch 2, **dadurch gekennzeichnet, dass** die Aufnahmenut (78) eine Ringnut (84) umfasst, in die eine korrespondierende Ringwulst (86) des Profil-Ringes (60) eingreift.

4. Tablettiermaschine nach einem der vorhergehenden Ansprüche, **dadurch gekennzeichnet, dass** das wenigstens eine Element (38) nur von einer Seite in den Füllschuh (28) montierbar ist.

5. Tablettiermaschine nach einem der vorhergehenden Ansprüche, **dadurch gekennzeichnet, dass** die Aufnahmenut (66) des Füllschuhs (28) von zwei im Wesentlichen senkrecht zu einer Unterseite (70) des Grundkörpers (50) verlaufenden Abschnitten begrenzt wird, die auf parallel zueinander beabstandeten Ebenen liegen.

6. Tablettiermaschine nach einem der vorhergehenden Ansprüche, **dadurch gekennzeichnet, dass** eine Innenfläche (82) des wenigstens einen Elementes (38) trichterförmig ausgebildet ist.

7. Tablettiermaschine nach einem der vorhergehenden Ansprüche, **dadurch gekennzeichnet, dass** das wenigstens eine Element (38) über Anlageflächen (64) verfügt, die sich unmittelbar an die Füllöffnung (54) anschließen.

8. Tablettiermaschine nach einem der vorhergehenden Ansprüche, **dadurch gekennzeichnet, dass** die Tablettiermaschine eine Rundläufer-Tablettiermaschine, eine Exzenter-Tablettiermaschine, eine hydraulische Tablettiermaschine oder dergleichen ist.

## Claims

1. A tableting machine (10) having a die block (12) which comprises at least one die (14), punches (16, 18) associated with the dies (14) as well as a filling device (26) for filling the dies (14) with a material (30) to be pressed, said filling device comprising a feed shoe (28) which is arranged substantially parallel to a surface (34) of the die block (12), wherein the feed shoe (28) has at least one filling opening (54) which is arranged or arrangeable in the region of the dies (14), as well as a sealing device arranged between the feed shoe (28) and the die block (12), the sealing device comprises at least one element (38) which is subjected to a force acting in the direction of the die block (12),
wherein
the sealing device directly configures the filling opening (54), the at least one element (38) is attached to a base body (50) of the feed shoe (28) by means of a spring element and the spring element is a profiled ring (60), **characterized in that** the base body (50) and the at least one element (38) form complementary seats for receiving the profiled ring (60).

2. The tableting machine according to Claim 1, **characterized in that** the seats are formed by circumferential receiving grooves (66, 78) which are open at a margin.

3. The tableting machine according to Claim 2, **characterized in that** the receiving groove (78) comprises an annular groove (84), in which a corresponding annular bead (86) of the profiled ring (60) engages.

4. The tableting machine according to any one of the preceding claims, **characterized in that** the at least one element (38) is installable in the feed shoe (28) from only one side.

5. The tableting machine according to any one of the preceding claims, **characterized in that** the receiving groove (66) of the feed shoe (28) is delimited by two segments which extend substantially perpendicular to a bottom side (70) of the base body (50) and are located on parallel, spaced-apart planes.

6. The tableting machine according to any one of the preceding claims, **characterized in that** an inner surface (82) of the at least one element (38) is formed as funnel-shaped.

7. The tableting machine according to any one of the preceding claims, **characterized in that** the at least one element (38) has contact surfaces (64) which directly abut the filling opening (54).

8. The tableting machine according to any one of the preceding claims, **characterized in that** the tableting machine is a rotary tableting machine, an eccentric tableting machine, a hydraulic tableting machine or the like.

## Revendications

1. Machine à fabriquer des comprimés (10) avec une table à matrices (12) comprenant au moins une matrice (14), des poinçons (16, 18) associés aux matrices (14) ainsi qu'un dispositif de remplissage (26) destiné à introduire une masse (30) à comprimer dans les matrices (14) et pourvu d'un sabot de remplissage (28) sensiblement parallèle à une surface (34) de la table à matrices (12), le sabot de remplissage (28) présentant au moins une ouverture de remplissage (54) ménagée ou pouvant être ménagée au niveau des matrices (14), ainsi qu'un dispositif d'étanchéité entre le sabot de remplissage (28) et la table à matrices (12), le dispositif d'étanchéité comprenant au moins un élément (38) sollicité par une force s'exerçant dans la direction de la table à matrices (12), le dispositif d'étanchéité formant directement l'ouverture de remplissage (54), ledit au moins un élément (38) étant fixé sur un corps de base (50) du sabot de remplissage (28) par un élément à ressort et ledit élément à ressort étant une bague profilée (60), **caractérisée en ce que** le corps de base (50) et ledit au moins un élément (38) forment des réceptions complémentaires pour le logement de la bague profilée (60).

2. Machine à fabriquer des comprimés selon la revendication 1, **caractérisée en ce que** les réceptions sont formées par des rainures périphériques à bord ouvert (66, 78).

3. Machine à fabriquer des comprimés selon la revendication 2, **caractérisée en ce que** la rainure de réception (78) comprend une rainure annulaire (84) où s'engage un bourrelet annulaire (86) correspondant de la bague profilée (60).

4. Machine à fabriquer des comprimés selon l'une quelconque des revendications précédentes, **caractérisée en ce que** ledit au moins un élément (38) ne peut être monté que par un côté dans le sabot de remplissage (28).

5. Machine à fabriquer des comprimés selon l'une quelconque des revendications précédentes, **caractérisée en ce que** la rainure de réception (66) du sabot de remplissage (28) est délimitée par deux segments s'étendant sensiblement perpendiculairement à la face inférieure (70) du corps de base (50), lesquels sont situés sur des plans espacés et parallèles l'un à l'autre.

6. Machine à fabriquer des comprimés selon l'une quelconque des revendications précédentes, **caractérisée en ce qu'**une surface intérieure (82) dudit au moins un élément (38) est prévue en forme d'entonnoir.

7. Machine à fabriquer des comprimés selon l'une quelconque des revendications précédentes, **caractérisée en ce que** ledit au moins un élément (38) dispose de surfaces de butée (64) immédiatement adjacentes à l'ouverture de remplissage (54).

8. Machine à fabriquer des comprimés selon l'une quelconque des revendications précédentes, **caractérisée en ce que** ladite machine à fabriquer des comprimés est une machine rotative à fabriquer des comprimés, une machine à fabriquer des comprimés à excentrique, une machine à fabriquer des comprimés hydraulique, ou similaire.
